(19) Europäisches Patentamt
European Patent Office
Office européen des brevets

(11) **EP 3 221 654 B1**

(12) **FASCICULE DE BREVET EUROPEEN**

(45) Date de publication et mention de la délivrance du brevet:
**20.04.2022 Bulletin 2022/16**

(21) Numéro de dépôt: **15804170.7**

(22) Date de dépôt: **17.11.2015**

(51) Classification Internationale des Brevets (IPC):
**F28D 1/04** *(2006.01)*  **B60H 1/00** *(2006.01)*
**F28F 1/32** *(2006.01)*  **F25D 3/10** *(2006.01)*
**F28D 1/047** *(2006.01)*  **F28D 21/00** *(2006.01)*

(52) Classification Coopérative des Brevets (CPC):
**B60H 1/3227; B60H 1/00014; B60H 1/00335;
F25B 39/02; F25D 3/10; F28D 1/0417;
F28D 1/0477; F28F 1/32;** F28D 2021/0033;
F28D 2021/0064

(86) Numéro de dépôt international:
**PCT/FR2015/053105**

(87) Numéro de publication internationale:
**WO 2016/079418 (26.05.2016 Gazette 2016/21)**

(54) **VÉHICULE POUR LE TRANSPORT CRYOGÉNIQUE EN INJECTION INDIRECTE COMPORTANT UN ÉCHANGEUR COMPACT**

FAHRZEUG FÜR KRYOGENFLÜSSIGKEITSTRANSPORT MIT INDIREKTER EINSPRITZUNG MIT KOMPAKTEM WÄRMETAUSCHER

VEHICLE FOR INDIRECT-INJECTION CRYOGENIC TRANSPORTATION COMPRISING A COMPACT EXCHANGER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.11.2014 FR 1461237**

(43) Date de publication de la demande:
**27.09.2017 Bulletin 2017/39**

(73) Titulaire: **L'Air Liquide Société Anonyme pour l'Etude et
l'Exploitation des Procédés Georges Claude
75007 Paris (FR)**

(72) Inventeurs:
• **YOUBI-IDRISSI, Mohammed
91300 Massy (FR)**
• **DALLAIS, Antony
91640 Janvry (FR)**
• **CLEMENT, Cécile
91400 Saclay (FR)**
• **ZERBINATTI, Celso
78530 Buc (FR)**

(74) Mandataire: **Air Liquide
L'Air Liquide S.A.
Direction de la Propriété Intellectuelle
75, Quai d'Orsay
75321 Paris Cedex 07 (FR)**

(56) Documents cités:
**WO-A1-03/099487      CN-A- 102 918 338
JP-A- 2003 075 087      JP-B2- 3 890 115
US-A1- 2003 029 179**

**Description**

La présente invention concerne le domaine du transport et de la distribution de produits thermosensibles, tels les produits pharmaceutiques et les denrées alimentaires. Dans ce domaine, le froid nécessaire au maintien de la température des produits est fourni principalement par deux technologies différentes :

- un groupe frigorifique à compression mécanique de vapeur fonctionnant en boucle fermée ;
- un groupe cryogénique fonctionnant en boucle ouverte et mettant en œuvre une injection directe ou indirecte de fluides cryogéniques et en particulier d'azote liquide.

La présente invention s'intéresse plus particulièrement aux solutions cryogéniques à injection indirecte. Dans de telles solutions, le fluide cryogénique est acheminé depuis un réservoir cryogénique embarqué sur le camion frigorifique (en général en dessous du camion) jusqu'à un ou plusieurs échangeurs thermiques situés à l'intérieur de la ou les chambres froides du camion, échangeurs munis de moyens de circulation d'air. Ces échangeurs permettent le refroidissement de l'air interne de la chambre stockant les produits, à la température désirée.

La chaleur extraite de l'air permet, tout d'abord, une évaporation complète du fluide cryogénique circulant dans l'échangeur, puis une élévation de sa température jusqu'à une température proche de celle de l'enceinte. Le fluide cryogénique en sortie d'échangeur est alors rejeté à l'extérieur après avoir cédé un maximum d'énergie de refroidissement.

Les groupes cryogéniques à injection indirecte ont, en comparaison des groupes froid mécanique, des avantages en terme de bruit, de qualité du froid, de sécurité et de réduction de l'empreinte carbone, mais également de réduction des émissions de particules fines, avantages aujourd'hui bien connus et incontestables. Cependant, un point y demeure délicat, il s'agit du choix de la technologie d'échangeur mise en œuvre dans la caisse : sa conception et son installation sont primordiaux dans la constitution d'une solution performante répondant au cahier des charges de ce secteur industriel.

La présente invention s'attache alors à proposer une conception innovante d'un échangeur cryogène/air ((azote, oxygène, argon, krypton, ... ou leurs mélanges)/air) destiné à l'application du transport frigorifique, permettant d'augmenter de façon significative sa compacité et sa facilité de montage en comparaison des caractéristiques des échangeurs de froid mécanique existant et bien connus de l'homme du métier, tout en maintenant un niveau de performance notable.

Rappelons en effet que dans l'état actuel de ce domaine technique, les échangeurs utilisés dans les groupes cryogéniques à injection indirecte sont essentiellement des types suivants :

1- Les échangeurs à spirales : l'échangeur est composé de plusieurs spires hélicoïdales reliées entre elles (en amont et en aval) via un distributeur et un collecteur. Seule la surface primaire constitue la surface d'échange nécessaire à l'extraction de la chaleur de l'air. Ceci se traduit par un encombrement élevé. Typiquement, la compacité de tels échangeurs pour produire 10kW de puissance frigorifique à -20°C est de l'ordre de 10m$^2$/m$^3$. Ceci oblige à positionner les échangeurs verticalement, notamment dans la chambre avant, avec des contraintes de coût, de place disponible, de poids, de temps de montage et de difficulté pour convertir en solution cryogénique des camions fonctionnant avec un groupe du froid mécanique.

2- Les échangeurs à tubes et ailettes standards (on parle de « batteries en tubes et ailettes ») : cette technologie offre certes une meilleure compacité, mais les échangeurs standards présents sur le marché ont été exclusivement conçus pour fonctionner avec les fluides frigorigènes des groupes mécaniques (R-404A, R410A, R22, R744, ...). Intrinsèquement, ces échangeurs fonctionnant comme évaporateurs sont habituellement alimentés en un mélange fortement diphasique (20 à 40% du titre massique en vapeur). En sortie, le fluide est à l'état de vapeur surchauffée mais de quelques degrés seulement, avant qu'il ne soit aspiré par le compresseur pour continuer son cycle frigorifique. La conception de tels échangeurs prend en considération ces conditions de fonctionnement.

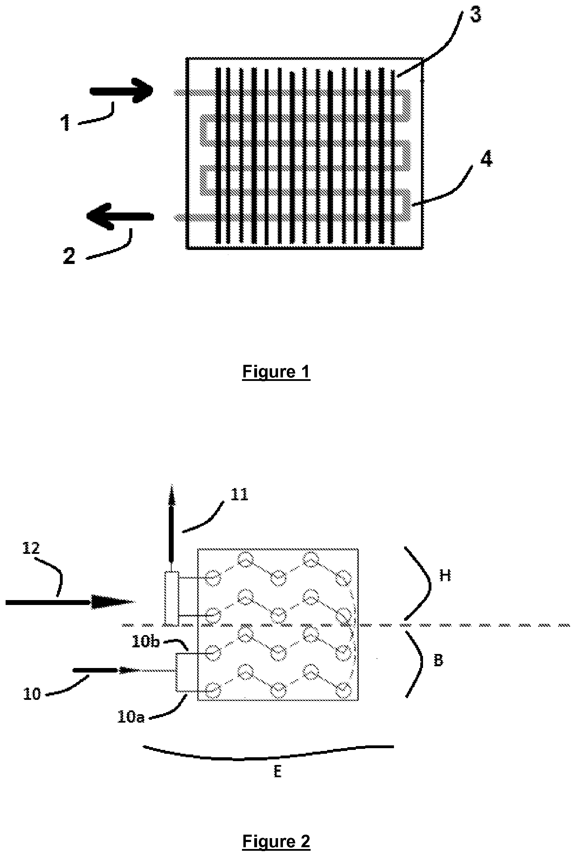

La figure 1 annexée illustre un exemple d'une telle batterie en tubes et ailettes (ailettes dites continues par opposition aux ailettes dites individuelles » ou « tubes ailettés »). On y voit bien que la batterie comporte une canalisation unique où peut circuler un fluide cryogénique, entre une entrée du fluide dans l'échangeur et une sortie du fluide de l'échangeur et un système d'ailettes planes et parallèles, traversées par la canalisation dans son circuit à l'intérieur de l'échangeur, l'air pouvant circuler au sein de l'échangeur en traversant des canaux délimités par l'espace entre la canalisation et les ailettes parallèles. En l'occurrence la figure 1 illustre un échangeur à courants croisés où l'air circule dans une direction perpendiculaire au plan de la figure.

Ces échangeurs/évaporateurs standards ne sont pas adaptés pour y admettre un liquide cryogénique tel l'azote liquide en tant que fluide frigorigène. Ils ne sont tout simplement pas adaptés pour fournir les niveaux requis de performance, c'est-à-dire de puissance frigorifique à une température donnée.

3- Les échangeurs caloducs : leur principe de fonctionnement est par exemple décrit dans le document WO2013/006217. On peut avoir de très sérieux doutes quant à l'utilisation de cette technologie pour convertir des camions fonctionnant avec un groupe de froid mécanique en solution cryogénique de type injection indirecte.

La présente invention propose alors une conception innovante d'échangeur cryogène/air, basée sur une structure de base qui est une technologie de batterie en tubes et ailettes, qui compte tenu des remarques et réserves listées ci-dessus, a dû être profondément modifiée pour répondre au cahier des charges de ce secteur technique.

Comme on le verra plus en détails dans ce qui suit, la Demanderesse s'est attachée à la résolution des points suivants, pour améliorer les batteries tubes et ailettes existantes :

- Selon la qualité d'isolation de la tuyauterie reliant le réservoir cryogénique à l'échangeur, l'alimentation de l'échangeur se fait avec un liquide légèrement diphasique (typiquement 1% à 10% maximum). La distribution du fluide dans l'échangeur (circuiterie) est par conséquent un point qu'il faut soigneusement adresser, d'autant plus en considérant le fait que la présence de quelques pourcents de débit massique du cryogène sous forme vapeur se traduit en quantité très importante en terme de débit volumique. A titre illustratif, un titre massique de vapeur à 5% équivaut à 90% de taux de vide.

- Cette conception de la circuiterie de parcours du cryogène au sein de l'échangeur doit être également adressée très attentivement sur la question du « pincement » de l'échangeur. En effet, pour une meilleure exploitation de l'énergie interne du cryogène et une optimisation du rendement de l'échangeur, il faut s'attacher à ce que le pincement de l'échangeur soit de quelques degrés seulement.

On rappelle que la notion de « pincement » d'un échangeur s'exprime de la façon suivante :

$$\text{Pincement} = T_{int} - T_{\text{sortie fluide}} ;$$

où $T_{int}$ = la température interne à la chambre
et $T_{\text{sortie fluide}}$ = la température des vapeurs froides sortant de l'échangeur

Autrement dit, l'énergie interne exploitée dans le cas d'un échangeur alimenté avec un cryogène est d'environ 50% sous forme de chaleur latente et 50% de chaleur sensible. Cette particularité (qui est absente dans les échangeurs/évaporateurs du froid mécanique) impose un choix optimum du circuit de progression du cryogène à l'intérieur de l'échangeur pour avoir un temps de séjour suffisant du cryogène dans l'échangeur. En effet, les pertes de charges dans l'échangeur pour le cryogène doivent être optimisées (moyennant un circuit adapté) : trop peu de pertes de charges se traduit par un temps de séjour faible du cryogène (progression rapide) qui sort de l'échangeur à des températures très froides (pincement élevé) et se traduit donc par un rendement réduit, synonyme d'une forte consommation, tandis que trop de pertes de charges allonge le temps de séjour dans l'échangeur, d'où un débit réduit, et une puissance frigorifique réduite.

- la question de la formation de givre sur les surfaces d'échange de l'échangeur est aussi une question cruciale qu'il faut adresser : le transport des produits sous température dirigée est un maillon de la chaine du froid, ces produits sont amenés à être livrés à leurs destinataires pour qu'ils soient stockés dans des chambres froides, des meubles de ventes frigorifiques, des frigos etc ... Leur livraison impose inévitablement des ouvertures de portes du camion pour décharger et charger les produits, ouvertures parfois nombreuses au cours d'une tournée. Durant ces ouvertures de portes, il s'opère un transfert de chaleur et de masse entre le volume de l'enceinte réfrigérée et l'atmosphère extérieure. Ceci se traduit par une élévation de la température dans le camion et surtout par un dépôt du givre sur les surfaces froides, notamment celles de l'échangeur. Ouverture après ouverture, la couche du givre s'épaissie provoquant une résistance thermique au transfert du froid vers l'air et une réduction des sections de passage de l'air au sein de l'échangeur (entre les ailettes), d'où un effondrement de la puissance frigorifique maximum disponible.

- la question de la compacité des échangeurs doit également être adressée puisqu'en effet, la taille des camions porteurs et semi-remorques partout dans le monde est standardisée et est fonction du nombre de palettes qui y sont transportées. Par conséquent, le choix de l'emplacement de l'échangeur dans la caisse interne du camion est limité et les opérateurs préfèrent le voir positionné au plafond pour ne pas impacter la charge utile du camion. Cela implique la conception d'un échangeur compact par rapport à l'encombrement des échangeurs/évaporateurs du froid mécanique.

La présente invention concerne alors un véhicule de transport de produits thermosensibles en camion réfrigéré tel que défini dans la revendication 1. Un tel véhicule est connu de US 2003/029179.

Selon l'invention, on favorise le fait que la formation de givre s'effectue essentiellement dans la partie haute de l'échangeur (en libérant ainsi le reste de l'échangeur) : pour cela, en considérant l'échangeur dans l'espace comme une « caisse » avec une partie haute, une partie basse et des cotés, on met en œuvre le fait que le cryogène entre dans la partie haute de l'échangeur, et parcourt un certain nombre de longueurs dans la partie haute de l'échangeur avant de descendre vers la partie basse de l'échangeur.

Comme il apparaitra clairement à l'homme du métier, dans cette configuration, la partie haute accueille le cryogène à l'état liquide ou liquide/vapeur, c'est ainsi la plus froide, elle représente donc une zone plus favorable à l'accumulation du givre, ce qui permet de limiter les conséquences de l'accumulation du givre, tant thermiques qu'aérauliques dans le reste de l'échangeur i.e sur la partie dédiée à la chaleur sensible. A titre illustratif, conformément à l'invention, environ 50% de la surface d'échange est située dans la moitié haute de l'échangeur (de la caisse).

On peut d'ailleurs mentionner que cette conception présente également un autre avantage lié à la période du dégivrage de l'échangeur puisqu'en effet, en considérant l'exemple du dégivrage à l'aide de résistances électriques, en plaçant par exemple deux tiers des résistances électriques chauffantes dans la partie haute de l'échangeur, cela permet de dégivrer plus rapidement cette partie, le givre qui se transforme ainsi en eau liquide s'écoulera alors par gravité sur la partie basse de l'échangeur et participera en partie à son dégivrage. Cette conception favorise alors un temps de dégivrage plus court et participe à une évacuation des condensas (le givre devenu liquide) vers l'extérieur.

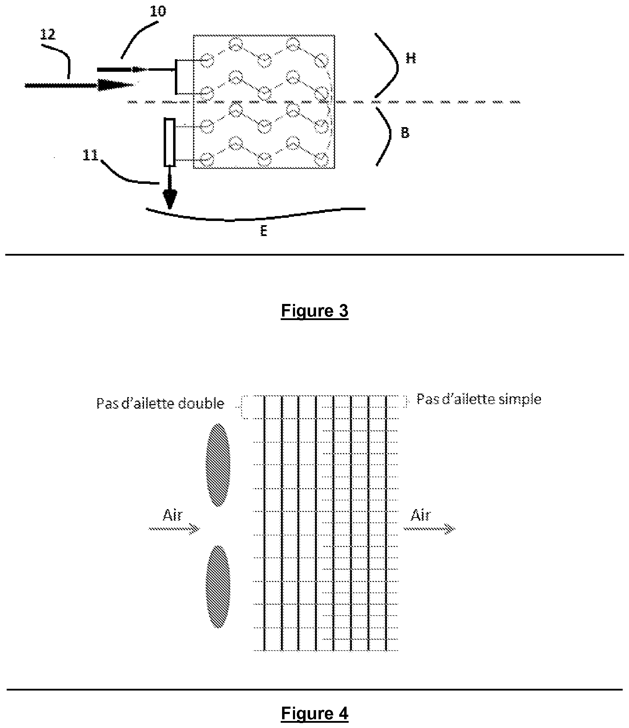

- selon un des modes de réalisation avantageux de l'invention, dans la partie haute de l'échangeur, le sens de circulation de l'air dans l'espace est à co-courant du sens de circulation du cryogène, tandis que dans la partie basse de l'échangeur l'air circule à contre-courant (la partie basse dédiée à la chaleur sensible étant en contre-courant plus efficace thermiquement). A titre illustratif, conformément à l'invention, dans la moitié haute de l'échangeur (de la caisse) l'air circule entre les ailettes à co-courant du sens de circulation du cryogène dans cette moitié haute, tandis que dans la moitié basse de l'échangeur l'air circule entre les ailettes à contre-courant du sens de circulation du cryogène dans cette moitié basse.
- selon l'un des modes de réalisation avantageux de l'invention, le pas des ailettes est situé dans la gamme de 6 à 10 mm.
- selon un autre des modes de réalisation avantageux de l'invention, on met en oeuvre une conception de batterie en tubes et ailettes planes continues dont le pas d'ailettes (distance entre deux ailettes successives) est variable dans le sens de circulation de l'air (comme nous l'illustrerons dans le cadre de la figure 4 ci-après). Ainsi, sur toute la longueur de la batterie pour la première partie intervenant après les ventilateurs, on favorisera un grand pas d'ailette, représentant par exemple deux à trois fois le pas de la deuxième partie (coté sortie d'air). Une telle configuration s'obtient par exemple par l'incorporation dans le sens de la profondeur de la batterie d'une ailette plane continue sur toute la profondeur (ailette complète), en alternance avec une ailette plane continue sur la moitié de la profondeur (demi-ailette). Ainsi, en mettant successivement une ailette complète suivie d'une demi-ailette, on obtient une batterie à pas double côté entrée air, et à pas simple côté sortie d'air. Et en mettant successivement une ailette complète suivie de deux demi-ailettes, on obtient une batterie à pas triple côté entrée air, et à pas simple côté sortie d'air.

Les expérimentations menées à bien par la Demandresse ont montré qu'une telle conception améliore nettement la résistance de l'échangeur à l'accumulation du givre. Dans les conditions extrêmes de température et d'humidité, l'échangeur cryogénique conçu de la sorte garde sa performance pendant au minimum une ouverture de porte supplémentaire avant qu'il ne rentre en cycle de dégivrage. Dans des conditions de fonctionnement normales de saisons, se sont ainsi plusieurs ouvertures de portes supplémentaires qui ont été réalisées sans que la performance de l'échangeur soit altérée, d'où une économie significative pour l'énergie de dégivrage et une sécurisation accrue pour la chaîne du froid.

D'autres caractéristiques et avantages de la présente invention apparaîtront plus clairement dans la description suivante, donnée à titre illustratif mais nullement limitatif, faite en relation avec les dessins annexés pour lesquels :

- la figure 1 est une vue schématique partielle de coté d'une batterie de type tube et ailettes conforme à l'art antérieur.
- la figure 2 est une vue schématique partielle de face d'une batterie conforme à l'invention, mettant en œuvre deux canalisations indépendantes de circulation du fluide cryogénique au sein de l'échangeur (vue de face i.e l'on voit ici la face d'entrée et sortie des canalisations dans et de l'échangeur) dans le cas d'une entrée basse.
- la figure 3 est une vue schématique partielle d'une autre batterie conforme à l'invention, illustrant un mode préféré de mise en oeuvre de l'invention, comme décrit plus haut, puisque mettant en oeuvre une entrée haute.
- la figure 4 est une vue schématique partielle d'une batterie de type tube et ailettes conforme à l'invention illustrant un mode de réalisation où le pas d'ailettes (distance entre deux ailettes successives) est variable dans le sens de circulation de l'air.

On a déjà indiqué plus haut le fait que la figure 1 est une vue schématique partielle de coté d'une batterie de type tube et ailettes conforme à l'art antérieur, qui comprend un système d'ailettes planes (3), continues et parallèles, traversées par une unique canalisation (4) dans son circuit à l'intérieur de l'échangeur (entrée du cryogène en 1, sortie du cryogène en 2), l'air circulant au sein de l'échangeur en traversant des canaux délimités par l'espace entre la canalisation et les ailettes parallèles, en l'occurrence l'air circule ici dans une direction perpendiculaire au plan de la figure (échangeur dit « à courants croisés »).

La figure 2 illustre donc en revanche une structure d'échangeur conforme à l'invention, en configuration d'entrée basse :

- les références 10 et 11 désignent respectivement l'entrée du cryogène dans l'échangeur et la sortie du cryogène de l'échangeur.
- l'échangeur se caractérise par la présence de deux canalisations indépendantes 10a et 10b formant le circuit du cryogène à l'intérieur de l'échangeur.
- la référence 12 désigne quant à elle le sens de parcours de l'air dans l'échangeur.
- comme on l'a dit plus haut, la figure 2 montre donc la face avant de l'échangeur i.e la face d'entrée et sortie des canalisations dans et de l'échangeur. En d'autres termes dans le contexte de cette vue, les canalisations vont vers le fond de la figure, reviennent vers cette face avant, repartent vers le fond etc....selon le nombre d'aller-retour effectués par le circuit suivi à l'intérieur de l'échangeur, avant de ressortir en face avant par la nourrisse 11.

Selon les règles classiques de représentation, les traits continus représentent les coudes visibles (extérieurs) reliant deux tubes ou portions de canalisation (entre une portion sortante et la portion qui re-rentre dans l'échangeur), tandis que les traits discontinus représentent les coudes reliant deux tubes et se retrouvant de l'autre côté de la batterie (sortant et re-rentrant dans la face du fond).

- la figure 2 illustre comme on l'a dit un mode de mise en œuvre de l'invention où les entrées-sorties du cryogène dans et de l'échangeur sont configurées pour pouvoir mettre en œuvre le fait que le cryogène entre dans la partie basse de l'échangeur, et parcourt une ou plusieurs longueurs des deux canalisations dans la moitié basse de l'échangeur (B) avant de monter vers le haut de l'échangeur.

La figure 3 illustre pour sa part un mode préféré de mise en oeuvre de l'invention, comme décrit plus haut, puisque mettant en oeuvre une entrée haute, où le cryogène entre dans la partie haute de l'échangeur, et parcourt une ou plusieurs longueurs des deux canalisations dans la moitié haute de l'échangeur (H) avant de descendre vers le bas de l'échangeur. Cela, on l'a vu, favorise le fait que dans cette configuration, la partie haute accueille le cryogène à l'état liquide ou liquide/vapeur, c'est ainsi la plus froide, elle représente donc une zone plus favorable à l'accumulation du givre, ce qui permet de limiter les conséquences de l'accumulation du givre dans le reste de l'échangeur i.e sur la partie basse (B) dédiée à la chaleur sensible. Ici en l'occurrence, environ 50% de la surface d'échange est située dans la moitié haute de l'échangeur.

La figure 3 illustre par ailleurs un autre mode préféré de mise en œuvre de l'invention où dans la moitié haute de l'échangeur, l'air circule entre les ailettes à co-courant du sens de circulation du cryogène dans cette moitié haute, tandis que dans la moitié basse (B) de l'échangeur l'air circule entre les ailettes à contre-courant du sens de circulation du cryogène dans cette moitié basse (dans la partie haute, l'entrée de l'air et l'entrée du cryogène sont en co-courant, tandis que dans la partie basse l'entrée de l'air et la sortie du cryogène sont à contre-courant).

Les expérimentations effectuées par la Demanderesse ont permis de démontrer qu'une telle conception de l'échangeur conforme à la figure 3 notamment a permis d'obtenir une meilleure performance tant sur sa puissance frigorifique que sur sa résistance au givre :

- la puissance nominale, plus importante qu'un échangeur non optimisé (tel celui de la figure 1) est maintenue : l'échangeur tel que celui de la figure 1 peut offrir certes une surface d'échange suffisante, mais notamment son circuitage, et le pas d'ailettes sont inadaptés à l'application cryogénique.
- la quantité de givre par m$^2$ est deux fois moins importante que celle formée dans des échangeurs non optimisés (tel celui de la figure 1).
- la compacité de l'échangeur a été augmentée d'un facteur 10 par rapport à un échangeur spiral mettant en œuvre une surface d'échange uniquement primaire.
- la perte de charge comparative entre les figures 1 et 2 s'évalue ainsi : 100-200mbar vs. 500 à 1000 mbars.
- la puissance frigorifique comparative entre les figures 1 et 2 s'évalue ainsi : 4 kW vs. 10kW.

Comme on l'aura compris à la lecture de ce qui précède, l'invention s'attache, par les modifications apportée à une batterie standard, et notamment par le circuitage adopté, à augmenter le temps de séjour du cryogène dans l'échangeur pour optimiser l'échange thermique avec l'air.

## Revendications

1. Véhicule de transport de produits thermosensibles en camion réfrigéré, de type dit à injection indirecte, camion muni :

> - d'au moins une chambre de stockage des produits,
> - d'une réserve d'un fluide cryogénique tel l'azote liquide,
> - d'un système d'échangeur thermique interne à ladite au moins une chambre, dans lequel circule le fluide cryogénique comportant une canalisation (4) où peut circuler un fluide cryogénique, entre une entrée (1) du fluide dans l'échangeur et une sortie (2) du fluide de l'échangeur;

- ainsi que d'un système de circulation d'air, par exemple de type ventilateurs, apte à mettre en contact l'air interne à la chambre avec les parois froides du système d'échangeur thermique,

**se caractérisant en ce que** le système d'échangeur thermique interne à au moins une desdites chambres est de type batterie tubes et ailettes, et comporte :

- un système d'ailettes planes (3), continues et parallèles, traversées par ladite canalisation dans son circuit à l'intérieur de l'échangeur, l'air (12) pouvant circuler au sein de l'échangeur en traversant des canaux délimités par l'espace entre la dite canalisation et les ailettes parallèles ,

l'échangeur comportant au moins deux canalisations (10a, 10b) indépendantes de circulation du fluide cryogénique au sein de l'échangeur,

et où, en considérant l'échangeur dans l'espace comme une caisse avec une partie haute (H), une partie basse (B) et des cotés, les entrée-sortie du cryogène dans et de l'échangeur sont configurées pour pouvoir mettre en œuvre le fait que le cryogène entre dans la partie haute de l'échangeur, et parcourt un certain nombre de longueurs de canalisations dans la moitié haute de l'échangeur avant de descendre vers le bas de l'échangeur.

2. Véhicule de transport selon la revendication 1, **se caractérisant en ce qu'** environ la moitié de la surface d'échange cryogène/air définie par lesdites canalisations est située dans la moitié haute de l'échangeur.

3. Véhicule de transport selon la revendication 1 ou 2, **se caractérisant en ce que** dans la moitié haute de l'échangeur, l'air circule entre les ailettes à co-courant du sens de circulation du cryogène dans cette moitié haute, tandis que dans la moitié basse de l'échangeur l'air circule entre les ailettes à contre-courant du sens de circulation du cryogène dans cette moitié basse.

4. Véhicule de transport selon l'une des revendications précédentes, **se caractérisant en ce que** le pas des ailettes est situé dans la gamme de 6 à 10 mm.

5. Véhicule de transport selon l'une des revendications 1 à 4, **se caractérisant en ce que** le pas des ailettes est variable dans le sens de circulation de l'air dans l'échangeur, préférentiellement avec un pas d'ailettes dans une première partie de l'échangeur correspondant à l'entrée de l'air valant deux à trois fois le pas d'ailettes existant dans la partie d'échangeur située du coté de la sortie d'air.

**Patentansprüche**

1. Transportfahrzeug für wärmeempfindliche Produkte im Kühllastwagen vom Typ mit indirekter Einspritzung, wobei der Lastwagen mit Folgendem ausgestattet ist:

- wenigstens einer Kammer zur Lagerung der Produkte,
- einer Reserve für ein kryogenes Fluid wie etwa flüssigen Stickstoff,
- einem Wärmetauschersystem innerhalb der wenigstens einen Kammer, in dem das kryogene Fluid zirkuliert, aufweisend eine Rohrleitung (4), wo ein kryogenes Fluid zwischen einem Einlass (1) des Fluids in den Wärmetauscher und einem Auslass (2) des Fluids aus dem Wärmetauscher zirkulieren kann;
- sowie einem Luftzirkulationssystem, zum Beispiel vom Ventilatorentyp, das geeignet ist, die Luft innerhalb der Kammer mit den kalten Wänden des Wärmetauschersystems in Kontakt zu bringen,

**dadurch gekennzeichnet, dass** das Wärmetauschersystem innerhalb wenigstens einer der Kammern vom Typ eines Satzes aus Rohren und Rippen ist und Folgendes aufweist:

- ein System aus planen, durchgehenden und parallelen Rippen (3), durch welche die Rohrleitung in ihrem Kreislauf innerhalb des Wärmetauschers verläuft, wobei die Luft (12) innerhalb des Wärmetauschers zirkulieren kann, indem sie Kanäle durchströmt, die von dem Raum zwischen der Rohrleitung und den parallelen Rippen begrenzt werden,

wobei der Wärmetauscher wenigstens zwei unabhängige Rohrleitungen (10a, 10b) zur Zirkulation des kryogenen Fluids innerhalb des Wärmetauschers aufweist, und wobei unter Betrachtung des Wärmetauschers im Raum als ein Kasten mit einem oberen Abschnitt (H), einem unteren Abschnitt (B) und Seiten, der Ein- und der Auslass in den und aus dem Wärmetauscher dazu ausgebildet sind, die Tatsache umsetzen zu können, dass das Kryogen in den oberen Abschnitt des Wärmetauschers eintritt und eine bestimmte Anzahl von Rohrleitungslängen in der oberen Hälfte des Wärmetauschers durchläuft, bevor es zum unteren Abschnitt des Wärmetauschers hinabsteigt.

**2.** Transportfahrzeug nach Anspruch 1, **dadurch gekennzeichnet, dass** sich ungefähr die Hälfte der Kryogen/Luft-Austauschfläche, die von den Rohrleitungen definiert ist, in der oberen Hälfte des Wärmetauschers befindet.

**3.** Transportfahrzeug nach Anspruch 1 oder 2, **dadurch gekennzeichnet, dass** in der oberen Hälfte des Wärmetauschers die Luft zwischen den Rippen im Gleichstrom mit der Zirkulationsrichtung des Kryogens in dieser oberen Hälfte zirkuliert, während in der unteren Hälfte des Wärmetauschers die Luft zwischen den Rippen im Gegenstrom zur Zirkulationsrichtung des Kryogens in dieser unteren Hälfte zirkuliert.

**4.** Transportfahrzeug nach einem der vorhergehenden Ansprüche, **dadurch gekennzeichnet, dass** der Abstand der Rippen im Bereich von 6 bis 10 mm liegt.

**5.** Transportfahrzeug nach einem der Ansprüche 1 bis 4, **dadurch gekennzeichnet, dass** der Abstand der Rippen in der Zirkulationsrichtung der Luft im Wärmetauscher variabel ist, wobei vorzugsweise ein Rippenabstand in einem ersten Abschnitt des Wärmetauschers, der dem Einlass der Luft entspricht, zwei- bis dreimal so groß wie der Rippenabstand ist, der in dem Wärmetauscherabschnitt vorliegt, der sich auf der Seite des Luftauslasses befindet.

**Claims**

**1.** Vehicle for transporting heat-sensitive products in a refrigerated lorry, of the so-called indirect injection type, this lorry being provided with:

- at least one chamber for storing the products;
- a store of a cryogenic fluid such as liquid nitrogen;
- a heat exchanger system that is inside said at least one chamber, in which the cryogenic fluid circulates, comprising a duct (4) in which a cryogenic fluid can circulate, between an inlet (1) for the fluid into the exchanger and an outlet (2) for the fluid from the exchanger; and
- an air circulation system, for example of the fan type, which is able to bring the air inside the chamber into contact with the cold walls of the heat exchanger system;

**characterized in that** the heat exchanger system inside at least one of said chambers is of the tubes-and-fins battery type, and comprises:

- a system of planar fins (3) that are continuous and parallel and are passed through by said duct in its circuit inside the exchanger, the air (12) being able to circulate within the exchanger, passing through channels delimited by the space between said duct and the parallel fins,

the exchanger comprising at least two independent ducts (10a, 10b) for circulating cryogenic fluid inside the exchanger, and where, the exchanger in the space being considered as a box with an upper portion (H) and a lower portion (B) and sides, the inlet and outlet for the cryogen into and from the exchanger are configured to be able to implement the fact that the cryogen enters the upper portion of the exchanger and passes along a certain number of duct lengths in the upper portion of the exchanger before descending towards the bottom of the exchanger.

**2.** Transport vehicle according to Claim 1, **characterized in that** approximately half of the cryogen/air exchange surface defined by said ducts is located in the upper half of the exchanger.

**3.** Transport vehicle according to Claim 1 or 2, **characterized in that** in the upper half of the exchanger the air circulates between the fins in counter-current fashion with respect to the direction of circulation of the cryogen in this upper half, whereas in the lower half of the exchanger the air circulates between the fins in counter-current fashion with respect to the direction of circulation of the cryogen **in that** lower half.

**4.** Transport vehicle according to one of the preceding claims, **characterized in that** the spacing between the fins is between 6 and 10 mm.

**5.** Transport vehicle according to one of Claims 1 to 4, **characterized in that** the spacing between the fins can vary in the direction of circulation of the air in the exchanger, preferably with one fin spacing in a first portion of the exchanger corresponding to the air inlet being two to three times the fin spacing in that part of the exchanger located on the air outlet side.

**Figure 1**

**Figure 2**

**Figure 3**

Pas d'ailette double    Pas d'ailette simple

Air

Air

**Figure 4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013006217 A
- US 2003029179 A